# FASCICULE DE BREVET EUROPEEN

(11) **EP 3 840 324 B1**
(45) Date de publication et mention de la délivrance du brevet: **26.10.2022**
(21) Numéro de dépôt: 20209773.9
(22) Date de dépôt: 25.11.2020
(51) Int. Cl.: H04L 9/40

(54) **LIAISON SÉRIE ASYNCHRONE SÉCURISÉE**
GESICHERTE ASYNCHRONE SERIENVERBINDUNG
SECURE ASYNCHRONOUS SERIES LINK

(30) Priorité: 19.12.2019 FR 1914881
(43) Date de publication de la demande: 23.06.2021
(73) Titulaire: Eryma SAS, 92130 Issy les Moulineaux (FR)
(72) Inventeur: JUTEL, Dominique, 29300 Quimperle (FR)
(74) Mandataire: Novagraaf Technologies

(56) Documents cités:
- KR-B1- 101 578 910
- AAMIR SHAHZAD ET AL: "Real Time MODBUS Transmissions and Cryptography Security Designs and Enhancements of Protocol Sensitive Information", SYMMETRY, vol. 7, no. 3, 2 juillet 2015 (2015-07-02) , pages 1176-1210, XP055723040, DOI: 10.3390/sym7031176
- Paul L. Wilson ET AL: "MODSEC: A SECURE MODBUS PROTOCOL", Master Thesis, 31 août 2018 (2018-08-31), XP055722946, Extrait de l'Internet: URL:https://smartech.gatech.edu/bitstream/ handle/1853/62615/WILSON-THESIS-2018.pdf?s equence=1&isAllowed=y [extrait le 2020-08-17]
- Igor Nai Fovino ET AL: "Design and Implementation of a Secure Modbus Protocol" In: "IFIP Advances in Information and Communication Technology", 1 janvier 2009 (2009-01-01), XP055218625, ISSN: 1868-4238 vol. 311, pages 83-96, DOI: 10.1007/978-3-642-04798-5_6, * abrégé * * Sections 1 et 6 *
- HAYES GARRETT ET AL: "Securing modbus transactions using hash-based message authentication codes and stream transmission control protocol", 2013 THIRD INTERNATIONAL CONFERENCE ON COMMUNICATIONS AND INFORMATION TECHNOLOGY (ICCIT), IEEE, 19 juin 2013 (2013-06-19), pages 179-184, XP032476841, DOI: 10.1109/ICCITECHNOLOGY.2013.6579545 ISBN: 978-1-4673-5306-9 [extrait le 2013-08-13]

## Description

### DOMAINE TECHNIQUE

Ce document concerne les bus ou liaisons série asynchrones, notamment de type RS485-232-422, utilisant des protocoles « maître/esclave » et qui sont utilisées par des capteurs, par exemple des capteurs de détection d'intrusion, et la sécurisation d'une telle liaison série.

### ETAT DE LA TECHNIQUE

Le document par AAMIR SHAHZAD et al, intitulé « Real Time MODBUS Transmissions and Cryptography Security Designs and Enhancements of Protocol Sensitive Information », XP055723040, décrit des mécanismes de sécurisation basé sur SSL concernant uniquement de la partie TCP/IP d'un réseau communicant via le protocole MODBUS. En particulier, les liaisons séries entre un dispositif de gestion et les équipements (capteurs) ne sont pas sécurisées.

Le document par Paul. L. Wilson et al, intitulé « MODSEC : a secure modbus protocol », XP055722946, concerne la mise en œuvre du protocole MODBUS et sa sécurisation selon le protocole ModSec sur la base d'un chiffrement asymétrique pour adresser différentes vulnérabilité du protocole MODBUS de base. Cette solution technique repose sur la génération d'un certificat pour chaque entité sur la liaison, l'attribution d'identifiant en association avec des autorisations et le transfert sécurisé type SSH ou SFTP ou via clef USB du certificat. En outre, un partage de clef doit être effectué selon le protocole Diffie-Hellman.

Les liaisons série de type RS485, RS422, RS232 et dérivés, permettent à plusieurs dispositifs esclaves de communiquer avec un dispositif maître. Le principe maître / esclave est défini par exemple par le protocole JBUS/MODBUS. Ces liaisons séries peuvent être utilisées pour la mise en œuvre de liaisons entre des capteurs et un dispositif de supervision : le dispositif de supervision met en œuvre les fonctions du dispositif maître selon le protocole maître / esclave, tandis que chacun des capteurs met en œuvre les fonctions d'un dispositif esclave.

Les protocoles de type maître/esclave associés aux liaisons série ne sont cependant pas sécurisés. Leurs vulnérabilités sont bien connues. Les données utiles sont transmises en clair avec possibilité d'analyser les adresses valides de la table d'échange pour la lecture et/ou l'écriture via les codes erreurs. Lorsqu'un tel protocole est utilisé avec des équipements de type capteurs, il est possible de modifier facilement les paramètres de fonctionnement de la détection mise en œuvre par le capteur et/ou de modifier les résultats de la détection.

Un capteur est en outre susceptible d'être bloqué en exploitant les failles pouvant bloquer un capteur comme, par exemple : le dépassement non géré du nombre de caractères d'un message, l'écriture ou la lecture non gérée d'une adresse de la table d'échange inexistante, l'utilisation d'un code fonction inconnu perturbant et/ou bloquant le capteur, etc. Il existe aussi un risque de saturation d'un capteur et/ou de la liaison série suite à un envoi de messages falsifiés ou/et intempestifs concernant un capteur (déni de service).

Le contenu des messages transmis au capteur ou reçu du capteur étant constant ou facile à connaître, notamment dans les documentations publiques, cela laisse la porte ouverte au « clonage » des capteurs et/ou du dispositif maître par simulation d'envoi de messages sur la liaison série (attaque « Man in the middle »), avec recopie de messages authentiques ou avec contenu falsifié pour empêcher un capteur de transmettre et/ou de fonctionner. N'importe quel capteur sur un bus série peut « répudier » avoir transmis un message. Aucune méthode d'authentification ni protection anti-rejeu n'est disponible.

Il n'existe en outre pas de sonde de surveillance des échanges sur la liaison série qui permette une surveillance jusqu'au niveau des capteurs.

Le contenu d'un message peut aussi être corrompu de manière intentionnelle ou accidentelle par, par exemple, en raison d'une perturbation électrique et/ou électromagnétique de la liaison série impliquant une non-intégrité du contenu et ainsi de risque de non reconnaissance d'une alerte, d'un mauvais paramétrage, etc.

Ce risque de non-intégrité est aujourd'hui limité par l'utilisation en fin de message d'un code de contrôle avec redondance cyclique de 16 bits (connu sous l'acronyme CRC16, cyclic redundancy check 16). La robustesse de ce code de détection d'erreur reste limitée : 1 valeur au hasard a au moins une chance sur 2¹⁶ d'être correcte.

Enfin, en cas de rupture de la liaison série, il résulte une perte de la communication avec les capteurs raccordés en aval du point de la liaison série où s'est produit le défaut technique ou l'attaque.

Il apparaît ainsi nécessaire d'apporter des améliorations.

### RESUME

Selon un premier aspect, la présente description concerne un dispositif de supervision selon la revendication 1, par exemple pour un système de détection d'intrusion.

Dans un ou plusieurs modes de réalisation du dispositif de supervision selon le premier aspect, la deuxième trame de données comprenant un code d'authentification de message, le circuit de déchiffrement étant configuré pour effectuer un contrôle d'intégrité et d'authentification du message déchiffré au moyen du code d'authentification de message.

Dans un ou plusieurs modes de réalisation du dispositif de supervision selon le premier aspect, le premier message est un message chiffré résultant d'un chiffrement d'un message initial comprenant la requête à traiter par le premier capteur et une signature numérique du dispositif de supervision, la première trame de données comprenant un code d'authentification de message, le dispositif de supervision comprenant
- un circuit de chiffrement configuré pour stocker la signature numérique du dispositif de supervision et une clef de chiffrement propre au premier capteur et pour chiffrer le message initial au moyen de la clef de chiffrement de sorte à générer le premier message et générer le code d'authentification de message.

Dans un ou plusieurs modes de réalisation du dispositif de supervision selon le premier aspect, le message initial comprend une nouvelle clef de chiffrement propre au premier capteur et la requête étant une requête de remplacement d'une clef de chiffrement courante stockée dans un circuit de chiffrement du capteur par la nouvelle clef de chiffrement.

Dans un ou plusieurs modes de réalisation du dispositif de supervision selon le premier aspect, le premier message est un message chiffré résultant d'un chiffrement d'un message initial comprenant la requête à traiter par le premier capteur et une signature numérique du dispositif de supervision, le dispositif de supervision comprenant - une deuxième interface de communication reliée à la première interface de communication via une liaison interne au dispositif de supervision et connecté à l'autre extrémité de la liaison série asynchrone par rapport à la première interface de communication, la deuxième interface de communication étant configurée pour détecter sur la liaison série asynchrone une trame de données retour résultant de la transmission via la liaison série asynchrone de la première trame de données ;
le dispositif de supervision étant configuré pour comparer la première trame de données avec la trame de données retour et déclencher une opération en cas de différence entre la première trame de données et la trame de données retour et/ou en cas d'absence de trame de données retour.

Dans un ou plusieurs modes de réalisation du dispositif de supervision selon le premier aspect, le dispositif de supervision est en outre configuré pour détecter une rupture de la liaison série asynchrone en un point de rupture situé en amont du premier capteur en cas d'absence de réponse du premier capteur à la requête,
la deuxième interface de communication étant configurée pour, en cas de détection de la rupture, se substituer à la première interface de communication de sorte à émettre via la liaison série asynchrone une troisième trame de données conforme au protocole maître /esclave à destination du premier capteur situé en aval du point de rupture, la troisième trame de données comprenant une adresse non chiffrée du premier capteur et une nouvelle requête à traiter par le premier capteur.

Selon un deuxième aspect, la présente description concerne un capteur, par exemple un capteur de détection d'intrusion, selon la revendication 7.

Dans un ou plusieurs modes de réalisation du capteur selon le deuxième aspect, le premier message est un message chiffré résultant d'un chiffrement d'un message initial comprenant la requête à traiter par le premier capteur, la première trame de données comprenant un code d'authentification de message,
le capteur comprenant un circuit de déchiffrement configuré pour déchiffrer le message chiffré de sorte à générer un message déchiffré et pour effectuer un contrôle d'intégrité et d'authentification du message déchiffré au moyen du code d'authentification de message.

Dans un ou plusieurs modes de réalisation du capteur selon le deuxième aspect, le message initial comprend une nouvelle clef de chiffrement propre au premier capteur et la requête étant une requête de remplacement de la clef de chiffrement courante stockée dans le circuit de chiffrement du capteur par la nouvelle clef de chiffrement.

Selon un troisième aspect, la présente description concerne un système de détection d'intrusion comprenant un dispositif de supervision selon le premier aspect et au moins un capteur de détection d'intrusion selon le deuxième aspect.

Selon un quatrième aspect, la présente description concerne un procédé selon la revendication 11.

Selon un cinquième aspect, la présente description concerne un procédé selon la revendication 12.

Dans un ou plusieurs modes de réalisation du procédé selon le cinquième aspect, le premier message est un message chiffré résultant d'un chiffrement d'un message initial comprenant la requête à traiter par le premier capteur, la première trame de données comprenant un code d'authentification de message, le procédé comprenant en outre un déchiffrement par un circuit de déchiffrement du capteur du message chiffré de sorte à générer un message déchiffré et un contrôle d'intégrité et d'authentification par le circuit de déchiffrement du message déchiffré au moyen du code d'authentification de message.

Dans un ou plusieurs modes de réalisation, le dispositif de supervision selon le premier aspect comprend des moyens de mise en œuvre du procédé selon le quatrième aspect.

Dans un ou plusieurs modes de réalisation, le capteur selon le deuxième aspect comprend des moyens de mise en œuvre du procédé selon le cinquième aspect.

Dans un ou plusieurs modes de réalisation un algorithme de chiffrement utilisant un nonce est utilisé pour le chiffrement. Le nonce est intégré dans la trame de données transmise avec le message chiffré. Par définition, un nonce est un nombre arbitraire unique, pouvant être aléatoire, destiné à être utilisé une seule fois. Selon le type de chiffrement envisagé (AES CCM ou GCM), le nonce peut intégrer un compteur de messages. Ainsi chaque trame de données est unique.

### BREVE DESCRIPTION DES FIGURES

D'autres avantages et particularités résulteront de la description qui va suivre, donnée à titre d'exemple non limitatif et faite en référence aux figures annexées dans lesquelles:
[fig. 1] représente de manière schématique un système de supervision comprenant un dispositif de supervision relié via une liaison série à plusieurs capteurs;
[fig. 2a] représente de manière schématique un dispositif de supervision selon un ou plusieurs modes de réalisation;
[fig. 2b] représente de manière schématique un capteur selon un ou plusieurs modes de réalisation;
[fig. 3a] représente de manière schématique le traitement effectué sur une requête à transmettre selon un ou plusieurs modes de réalisation.
[fig. 3b] représente de manière schématique le traitement effectué sur une réponse à une requête selon un ou plusieurs modes de réalisation.
[fig. 4] représente de manière schématique un organigramme d'un procédé de communication adapté pour un dispositif de supervision.
[fig. 5] représente de manière schématique un organigramme d'un procédé de communication adapté pour un capteur.

### DESCRIPTION DETAILLEE

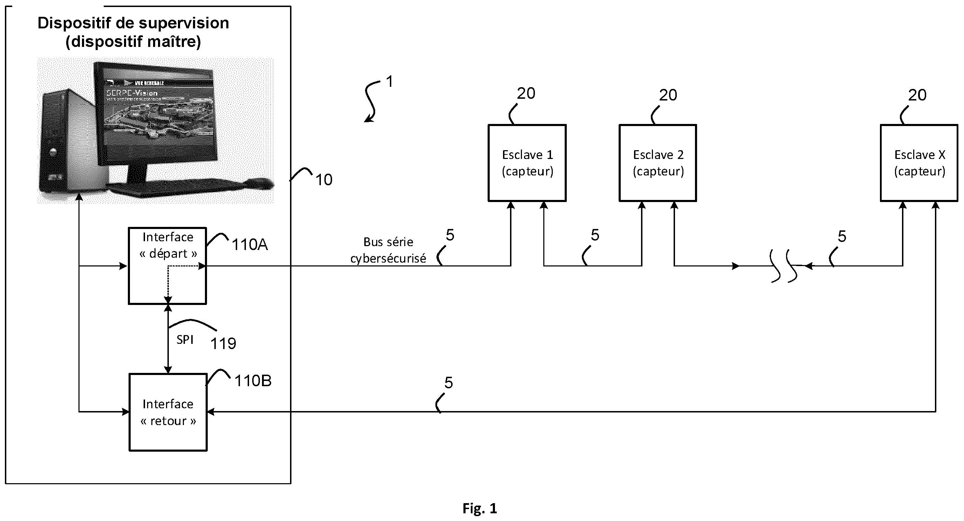

La figure 1 représente de manière schématique un système de détection d'intrusion (1) comprenant un dispositif de supervision (10) relié via une liaison série (5) à plusieurs capteurs (20), en l'occurrence des capteurs de détection d'intrusion. Dans le cadre de ce document, on utilisera indistinctement l'expression « liaison série » ou « bus série » pour désigner la liaison physique entre le dispositif de supervision (10) et les capteurs (20). On utilisera également l'expression « bus cyber-sécurisé » pour désigner le bus série utilisé pour transmettre de manière sécurisée entre le dispositif de supervision (10) et les capteurs (20) des messages selon ce qui est décrit plus en détail dans ce document.

Le dispositif de supervision (10) est configuré pour communiquer avec chaque capteur (20) via la liaison série (5) selon un protocole maître /esclave, par exemple de type JBUS / MODBUS. La liaison série est par exemple de type RS485, RS422, RS232 ou d'un type dérivé / d'une variante des types RS485, RS422, RS232. Plus généralement il peut s'agir d'une liaison série asynchrone.

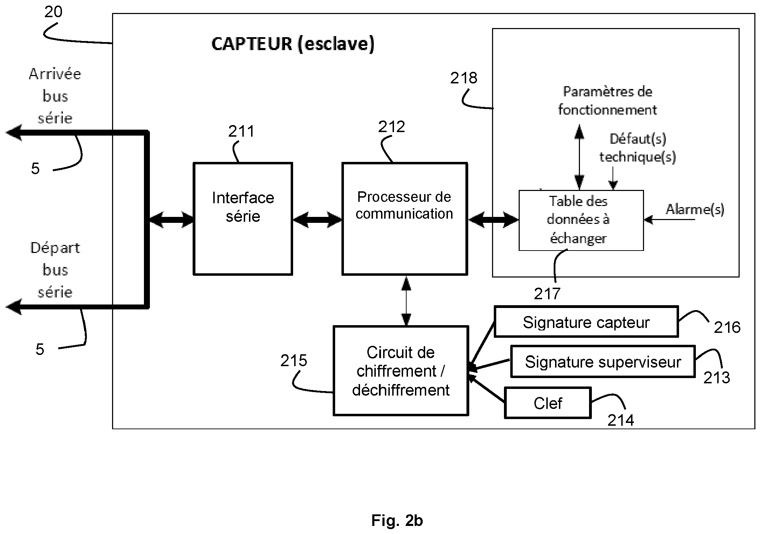

Différentes architectures sont possibles pour les capteurs (20). Un exemple d'architecture sera décrit ci-dessous pour un capteur (20) par référence à la figure 2b. Cette description est applicable à chacun des capteurs (20).

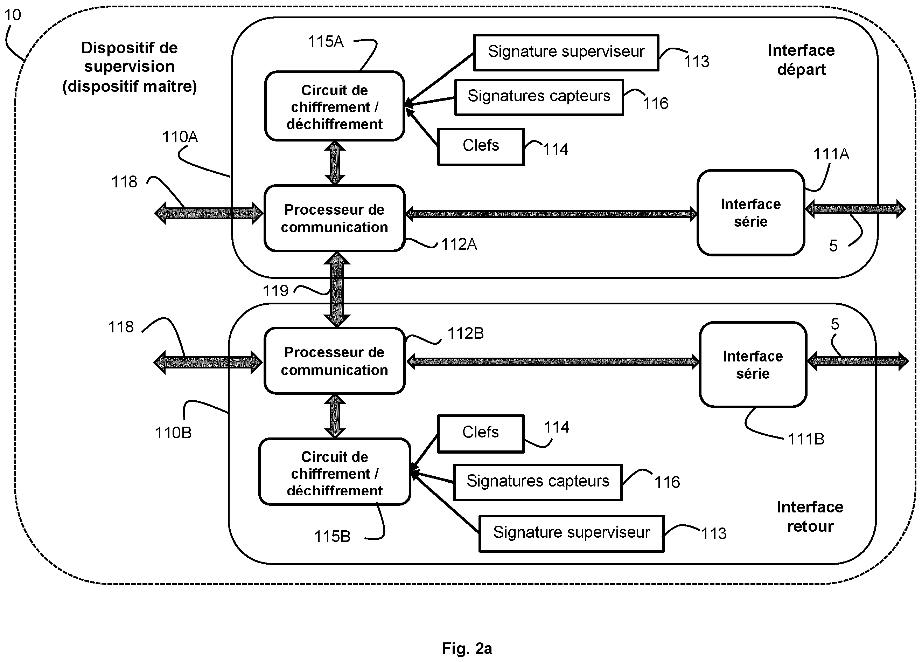

La figure 2a représente de manière schématique un dispositif de supervision (10) selon un ou plusieurs modes de réalisation.

Le dispositif de supervision (10) comprend une interface départ (110A) et une interface retour (110B). Les mêmes interfaces départ (110A) et retour (110B) sont représentées sur la figure 1.

Chacune des interfaces (110A, 110B) est semblable à l'autre et chacune peut mettre en œuvre, seule ou tour à tour, la gestion des communications via le bus série. Une redondance entre ces deux interfaces est en outre possible comme cela sera décrit plus en détail ci-dessous.

En mode de fonctionnement normal, il n'y a pas de redondance entre l'interface départ (110A) et l'interface retour (110b) : l'interface départ (110A) est utilisée comme dispositif maître pour à la fois émettre les requêtes et pour recevoir les réponses sous forme de trame de données chiffrées via le bus série, tandis que l'interface retour (110B) est utilisée uniquement pour écouter les trames émises sur le bus série. En mode de fonctionnement avec redondance, utilisé par exemple lorsqu'il y a une coupure du bus, l'interface départ (110A) est utilisée, comme dans le mode de fonctionnement normal, comme dispositif maître, à la fois pour émettre et recevoir les trames de données chiffrées des capteurs en amont de la coupure via le bus série, tandis que l'interface retour (110B) est utilisée comme dispositif maître pour les capteurs en aval de la coupure et émet et reçoit les trames de données chiffrées de ces capteurs via le bus série.

Chacune des interfaces (110A, 110B) comprend un circuit de chiffrement (115A, 115B) pour chiffrer les messages à destination des capteurs (20) et un circuit de déchiffrement (115A, 115B) pour déchiffrer les messages provenant des capteurs (20). Le circuit de chiffrement (115A, 115B) et le circuit de déchiffrement (115A, 115B) peuvent être un seul et même circuit physique, notamment lorsqu'un algorithme de chiffrement symétrique est utilisé. Sur la figure 2a, pour raisons de simplification, un seul circuit (115A, 115B) servant à la fois au chiffrement et au déchiffrement est représenté pour chaque interface (110A, 110B).

Le circuit de chiffrement / déchiffrement (115A, 115B) peut être réalisé par tout type de composant matériel (hardware) (par exemple, ASIC, FPGA, etc) adapté pour mettre en œuvre les fonctions décrites dans ce document pour le circuit de chiffrement et le déchiffrement. Ce composant hardware peut être un circuit analogique et/ou numérique. Ce composant hardware peut comprendre en outre du logiciel (software) et/ou micrologiciel (firmware). Ce composant hardware peut comprendre un ou plusieurs microprocesseurs ou microcontrôleurs.

Chaque circuit de chiffrement (115A, 115B) est configuré pour stocker une ou plusieurs clefs de chiffrement (114) et une signature numérique (113) du dispositif de supervision (10) (appelée également signature superviseur). Pour chaque capteur, une clef de chiffrement (114) associée à chaque capteur, et propre à ce capteur est stockée dans chaque circuit de chiffrement (115A, 115B).

La signature numérique (113) du dispositif de supervision (10) correspond par exemple à un ensemble d'un ou plusieurs octets ayant des valeurs particulières. Cette signature numérique est de préférence unique, propre au dispositif de supervision (10). La signature numérique peut correspondre à un numéro de série du dispositif de supervision (10), du circuit de chiffrement ou d'un ou plusieurs composants hardware du dispositif de supervision (10). La signature numérique peut être enregistrée dans le circuit de chiffrement en usine, au moment de la fabrication du dispositif de supervision (10) ou ultérieurement, selon tout protocole adapté.

Chaque circuit de déchiffrement (115A, 115B) est configuré pour stocker, pour chaque capteur à superviser, une clef de déchiffrement (114) associée à ce capteur, et propre à ce capteur et une signature numérique (116) de ce capteur (20) (appelée également signature capteur). Lorsqu'un chiffrement symétrique est utilisé, la clef de déchiffrement (114) associée à un capteur est identique à la clef de chiffrement (114). Sur la figure 2a, pour raisons de simplification, on utilise une même référence (114) pour les clefs de chiffrement et de déchiffrement des différents capteurs et une même référence (116) pour les signatures numériques des différents capteurs.

Dans un ou plusieurs modes de réalisation, un circuit de chiffrement et un circuit de déchiffrement peuvent être utilisés par capteur. Dans ce cas, le circuit de chiffrement et un circuit de déchiffrement ne sauvegardent et n'utilisent alors que la clef et la signature du capteur concerné. En outre, un seul et même circuit peut servir à la fois au chiffrement et au déchiffrement.

Comme pour le dispositif de supervision, la signature numérique (116) d'un capteur (20) correspond par exemple à un ensemble d'un ou plusieurs octets ayant des valeurs particulières. Cette signature numérique est propre au capteur (20) et à son firmware (code). La signature numérique peut correspondre au hachage d'une partie du firmware ou de sa totalité avec un numéro de série du capteur (20), du circuit de chiffrement ou d'un ou plusieurs composants hardware du capteur (20). La signature numérique peut être enregistrée dans le circuit de chiffrement en usine, au moment de la fabrication du dispositif de supervision (10) ou ultérieurement, selon tout protocole adapté.

Chaque circuit de chiffrement / déchiffrement (115A, 115B) peut mettre en œuvre un algorithme de chiffrement / déchiffrement asymétrique ou symétrique.

L'algorithme de chiffrement / déchiffrement est par exemple un chiffrement symétrique AES (Advanced Encryption Standard), avec compteur, par exemple de type CCM (Counter with) ou GCM (Galois/Counter Mode). La longueur des blocs de données et/ou des clefs de chiffrement pour l'AES est par exemple de 128 bits. Un tel algorithme obtient en entrée un nonce aléatoire unique avec compteur de messages à chaque chiffrement. Ce nonce est utilisé pour le chiffrement puis transmis avec les données chiffrées afin de permettre leur déchiffrement. Un tel algorithme permet d'obtenir une protection anti-rejeux.

Le mode CCM est un mode de fonctionnement pour le chiffrement par blocs. Il s'agit d'un algorithme de chiffrement avec authentification conçu pour permettre à la fois une authentification de l'émetteur et la confidentialité du message. Le mode CCM est défini pour des blocs de données de 128 bits.

Le mode GCM est un autre mode de fonctionnement possible pour le chiffrement par blocs. C'est un algorithme de chiffrement authentifié conçu pour fournir à la fois l'intégrité et l'authenticité des messages chiffrés, ainsi que la confidentialité des messages. Le chiffrement utilisé est basé sur un compteur (mode CTR) dans lequel la multiplication entre le compteur et la clef de 128 bits est effectuée dans un Corps de Galois.

Les clefs de chiffrement / déchiffrement (114) associées aux différents capteurs à superviser, la signature numérique du dispositif de supervision ainsi que les signatures numériques (116) des capteurs à superviser peuvent être stockées de manière sécurisée dans le circuit de chiffrement / déchiffrement (115A, 115B), de sorte par exemple à ne pouvoir être lues ou extraites de ce circuit de chiffrement / déchiffrement (115A, 115B). Le circuit de chiffrement / déchiffrement (115A, 115B) peut par exemple être doté d'un dispositif anti-effraction physique. Un dispositif anti-effraction physique est par exemple un détecteur de tentative de fraudes de types tension électrique, température, fréquence et lumière et un blindage actif. En cas d'attaque, le circuit de chiffrement est réinitialisé physiquement. Les données sensibles sont alors effacées. Par un tel dispositif anti-effraction physique, on obtient une protection physique de la clé de chiffrement / déchiffrement et de la signature numérique qui sont stockées dans le circuit de chiffrement / déchiffrement.

Chacune des deux interfaces départ et retour (110A, 110B) comprend en outre un processeur de communication (112A, 112B) pour les opérations de traitement des données qui ne sont pas effectuées par le circuit de chiffrement / déchiffrement (115A, 115B). Chaque processeur de communication (112A, 112B) est relié à un bus de communication (118) interne au dispositif de supervision pour la communication avec d'autres composants (non représentés) pour traitement, des données à destination ou en provenance des capteurs, respectivement avant chiffrement et après déchiffrement. Le processeur de communication (112A, 112B) et/ou le circuit de chiffrement (115A, 115B) et/ou le circuit de déchiffrement (115A, 115B) peuvent faire partie d'un même circuit embarqué ou correspondre à des circuits physiquement distincts. Toute autre répartition des fonctions de chacune des deux interfaces départ et retour (110A, 110B) entre un ou plusieurs circuits embarqués est envisageable.

Chacune des deux interfaces départ et retour (110A, 110B) comprend en outre une interface série (111A, 111B) pour l'émission et/ou la réception de trames de données via la liaison série (5) lors de la communication avec le ou les capteurs (20).

Les deux processeurs de communication (112A, 112B) des deux interfaces de communication (110A, 110B) sont reliés entre eux via une liaison de communication (119) interne au dispositif de supervision (10). Il peut s'agir d'une liaison de communication dédiée à la communication entre ces deux interfaces de communication. Cette liaison de communication (119) est par exemple une liaison SPI (Serial Peripheral Interface) qui est un bus de données série synchrone opérant en mode full-duplex. Les deux interfaces de communication (110A, 110B) peuvent ainsi communiquer entre elle selon un processus de redondance dont les principes seront décrits plus en détail ci-dessous.

La première interface de communication (110A) ou interface départ (110A) est configurée pour communiquer via l'interface série (111A) et la liaison série (5), avec l'un quelconque des capteurs (20) connectés à la liaison série. De même, la deuxième interface de communication (110B) ou interface retour (110A) est configurée pour communiquer via l'interface série (111B) et la liaison série (5), avec l'un quelconque des capteurs (20) connectés à la liaison série.

Une trame de données reçue par un capteur comprend une adresse sur le bus série du capteur (20) auquel la trame de données est destinée et un message destiné à ce capteur (20), ce message contenant par exemple une requête destinée à être traitée par le capteur (20) destinataire. Réciproquement, une trame de données émise par un capteur comprend une adresse sur le bus série du capteur (20) émetteur et un message destiné au dispositif de supervision (20), ce message contenant par exemple une réponse à une requête dispositif de supervision (20).

Le message peut être chiffré ou non chiffré selon la nature de la requête transmise par ce message, mais l'adresse sur le bus série du capteur (20) est dans les deux cas non chiffrée de sorte à éviter que chaque capteur (20) connecté au bus série ait à décoder chaque trame de données transmise sur le bus série pour déterminer si la trame de données lui est destinée ou non. En pratique, il apparaît qu'il n'est pas gênant de ne pas chiffrer l'adresse du capteur sur le bus série compte-tenu de la sécurisation apportée au reste de la trame de données, notamment par la signature numérique, le chiffrement du message et le code d'authentification de message et compte tenu de la qualité de la compatibilité électromagnétique de l'électronique des capteurs et du dispositif de supervision limitant significativement leur susceptibilité aux perturbations électromagnétiques conduites et rayonnées et ainsi leur vulnérabilité aux brouillages électromagnétiques et au déni de service correspondant. D'autre part l'utilisation d'une adresse chiffrée compliquerait significativement le traitement par le capteur des trames, en augmentant le nombre de messages à déchiffrer et ainsi en augmentant le temps d'occupation du processeur de communication. Enfin tel que construit et chiffré ce message s'intègre très facilement dans des trames conformes à un autre protocole (par exemple protocole IP, Internet Protocol) offrant ainsi par encapsulation le bénéfice de sa sécurisation à un système de gestion plus globale dans lequel serait intégré le dispositif de supervision et le système de détection d'intrusion avec ses capteurs.

Dans un ou plusieurs modes de réalisation, le message transmis à un capteur est systématiquement chiffré pour la transmission d'une nouvelle clef de chiffrement (respectivement déchiffrement) à un capteur. Dans ce cas le message comprend une requête chiffrée de remplacement de la clef de chiffrement (respectivement déchiffrement) courante stockée dans un circuit de chiffrement (respectivement déchiffrement) du capteur. La requête comprend la nouvelle clef de chiffrement (respectivement déchiffrement). A sa réception le capteur remplace dans le circuit de chiffrement l'ancienne clef par la nouvelle.

Dans un ou plusieurs modes de réalisation, le message transmis à un capteur est systématiquement chiffré aussi pour la transmission de nouvelles valeurs des paramètres de fonctionnement aux capteurs. Ces requêtes sont des demandes d'écriture de données dans le capteur.

Dans un ou plusieurs modes de réalisation, le message transmis à un capteur peut ne pas être chiffré pour des requêtes périodiques de demande d'état qui sont des demandes de lecture de données dans le capteur.

Dans un ou plusieurs modes de réalisation, le message est systématiquement chiffré pour les requêtes de demande de lecture spécifiques, c'est-à-dire non périodiques et concernant par exemple des données de réglage, de signature ou d'autre(s) intérêt(s).

Lorsque le message est chiffré, la trame de données transmise via le bus série comprend en outre un code d'authentification de message permettant un contrôle d'intégrité et d'authentification du message transmis dans cette trame de données. Dans le cas de l'utilisation d'un algorithme de chiffrement de type AES de type CCM ou GCM, la trame de données comprend en outre un nonce aléatoire qui correspond au vecteur d'initialisation utilisé dans cet algorithme de chiffrement.

La première interface de communication (110A) est également configurée pour recevoir via la liaison série en provenance de l'un quelconque des capteurs (20), une trame de données de réponse, conforme au protocole maître /esclave. La trame de données de réponse comprend l'adresse - sur le bus série - du capteur sollicité et un message chiffré. Le message chiffré résulte d'un chiffrement d'un message initial qui comprend une réponse du capteur (20) à une requête du dispositif de supervision (10).

La trame de données de réponse transmise via le bus série comprend en outre un code d'authentification de message permettant un contrôle d'intégrité et d'authentification du message transmis dans cette trame de données. Dans le cas de l'utilisation d'un algorithme de chiffrement de type AES de type CCM ou GCM, la trame de données comprend en outre un nonce aléatoire qui correspond au vecteur d'initialisation utilisé dans cet algorithme de chiffrement.

La deuxième interface de communication (110B) ou interface retour (110B) permet la mise en œuvre d'une redondance de fonctionnement. Comme illustrée plus précisément par la figure 1, l'interface retour (110B) est connectée à l'extrémité opposée du bus série par rapport à l'interface départ (110A), les capteurs (20) étant interconnectés en série entre ces deux interfaces.

L'interface retour (110B) compare les trames de données envoyées par l'interface départ (110A) à celles que l'interface retour (110B) détecte en extrémité du bus série, chaque trame de données reçue par l'interface retour (110B) résulte de la transmission, via la liaison série, d'une trame de données transmise par l'interface départ ou par un capteur (20). La comparaison est effectuée au niveau du dispositif de supervision (10), par exemple par l'interface retour (110B) ou l'interface départ (110A). La comparaison est effectuée par exemple par l'interface retour (110B) : dans ce cas, l'interface départ (110A) transmet, à l'interface retour (110B), pour chaque trame de données émise à destination de l'un des capteurs (20), en temps réel sur la liaison interne (119) (par exemple, interconnexion SPI), une copie de la trame de données émise. La comparaison ne nécessite pas de déchiffrement de message, une comparaison binaire (bit à bit) suffit pour déterminer si une trame de données a été propagée ou non sans incident jusqu'à l'extrémité du bus série. L'interface retour (110B) détermine ainsi l'état de fonctionnement du bus série, notamment la rupture ou non de la communication via le bus série. La rupture peut être totale (absence de données reçues par l'interface retour (110B)) ou partielle (dégradation des trames de données reçues par l'interface retour (110B) ou perte partielle de données dans les trames de données transmises).

Le dispositif de supervision (10) est configuré pour détecter une rupture de la liaison série en un point de rupture situé en amont d'un ou plusieurs capteur (20) en cas d'absence de réponse de ce ou ces capteurs (20) à au moins un message. En cas de détection d'une rupture de la communication via le bus série, l'interface départ (110A) détermine le point de rupture par analyse des réponses des capteurs (20) aux trames de données envoyées par l'interface départ (110A). Un capteur (20) (dispositif esclave) qui ne répond plus n'est en effet plus accessible à la communication et le point de rupture est localisé en amont de tout capteur (20) qui ne répond plus.

En cas de détection d'une rupture de la communication via le bus série, c'est-à-dire notamment en cas de différence entre la trame de données émise par l'interface départ (110A) dont une copie est transmise sur la liaison (119) et la trame de données reçue par l'interface retour (110B) et/ou d'absence de trame de données reçue par l'interface retour (110B) suite à une émission d'une trame de données par l'interface départ (110A), une ou plusieurs opérations peuvent être déclenchées. Par exemple, l'interface retour (110B) prend alors le relais de l'interface départ (110A) pour communiquer avec les capteurs (20) situés en aval du point de rupture déterminé et ce par exemple jusqu'à un retour à un état de communication normal du bus série. En outre, d'autres opérations peuvent être déclenchées comme par exemple un envoi d'un message d'alerte, une vérification de l'installation, par un technicien ou selon une autre méthode, etc.

La figure 2b représente de manière schématique un capteur (20) selon un ou plusieurs modes de réalisation. Un tel capteur est par exemple un capteur de détection d'intrusion, configuré pour mettre en œuvre une détection (selon toute technique de détection appropriée : détection infrarouge passif ou actif, acquisition et traitement d'image, détection radio hyperfréquence, détection de toucher de fils électriques tendus, détection d'écartement de fils mécaniques tendus, détection de coupure ou court-circuit de fils électriques, détection d'appuis mécaniques, détection de vibrations mécaniques enterrée ou non, etc) d'une intrusion par une personne ou un véhicule ou un animal dans une zone de surveillance. Ce capteur (20) est configuré pour communiquer via une liaison série selon un protocole maître /esclave avec un dispositif de supervision (10) selon l'un quelconque des modes de réalisation décrits dans ce document.

Le capteur (20) comprend un circuit de chiffrement (215) pour chiffrer les messages à destination du dispositif de supervision (10) et un circuit de déchiffrement (221) pour déchiffrer les messages provenant du dispositif de supervision (10). Le circuit de chiffrement (215) et le circuit de déchiffrement (215) peuvent être un seul et même circuit physique, notamment lorsqu'un algorithme de chiffrement symétrique est utilisé. Sur la figure 2b, pour raisons de simplification, un seul circuit (215) servant à la fois au chiffrement et au déchiffrement est représenté.

Le circuit de chiffrement / déchiffrement (215) peut être réalisé par tout type de composant matériel (hardware) (par exemple, ASIC, FPGA, etc) adapté pour mettre en œuvre les fonctions décrites dans ce document pour le circuit de chiffrement / déchiffrement (215). Ce composant hardware peut être un circuit analogique et/ou numérique. Ce composant hardware peut comprendre en outre du logiciel (software) et/ou micrologiciel (firmware). Ce composant hardware peut comprendre un ou plusieurs microprocesseurs ou microcontrôleurs.

Le circuit de chiffrement (215) est configuré pour stocker une clef de chiffrement (214) et une signature numérique (216) du capteur (20), propre à ce capteur. La clef de chiffrement (214) stockée dans le circuit de chiffrement (215) d'un capteur correspond à la clef de déchiffrement (114) stockée pour ce capteur dans le circuit de déchiffrement (115A, 115B) du dispositif de supervision. En cas de chiffrement symétrique, la clef de chiffrement (214) stockée dans le circuit de chiffrement (215) d'un capteur est identique à la clef de déchiffrement (114) stockée pour ce capteur dans le circuit de déchiffrement (115A, 115B) du dispositif de supervision.

Comme décrit plus haut, la signature numérique d'un capteur (20) correspond par exemple à un ensemble d'un ou plusieurs octets ayant des valeurs particulières. Cette signature numérique est propre au capteur (20) et à son firmware (code). La signature numérique peut correspondre au hachage d'une partie du firmware ou de sa totalité avec un numéro de série du capteur (20), du circuit de chiffrement ou d'un ou plusieurs composants hardware du capteur (20). La signature numérique peut être enregistrée dans le circuit de chiffrement en usine, au moment de la fabrication du dispositif de supervision (10) ou ultérieurement, selon tout protocole adapté.

Le circuit de déchiffrement (215) est configuré pour stocker une clef de déchiffrement (214) et une signature numérique (213) du dispositif de supervision (10), identique à la signature numérique (113) stockée dans le dispositif de supervision (10). La signature numérique (213) du dispositif de supervision (10) peut être enregistrée dans le circuit de chiffrement en usine, au moment de la fabrication du capteur (20) ou ultérieurement, selon tout protocole adapté.

La clef de déchiffrement (214) stockée dans le circuit de déchiffrement (215) d'un capteur correspond à la clef de chiffrement (114) stockée pour ce capteur dans le circuit de chiffrement (115A, 115B) du dispositif de supervision. En cas de chiffrement symétrique, la clef de déchiffrement (214) stockée dans le circuit de déchiffrement (215) d'un capteur est identique à la clef de chiffrement (114) stockée pour ce capteur dans le circuit de chiffrement (115A, 115B) du dispositif de supervision. En outre, la clef de déchiffrement (214) associée à un capteur peut être identique à la clef de chiffrement (214).

L'algorithme de chiffrement (respectivement de déchiffrement) utilisé par le capteur (20) correspond à celui utilisé par le dispositif de supervision (10) est par exemple un chiffrement / déchiffrement de type AES (Advanced Encryption Standard).

Comme pour le dispositif de supervision, les clefs de chiffrement (214) / déchiffrement (214), la signature numérique du dispositif de supervision et la signature numérique du capteur (216) peuvent être stockées de manière sécurisée dans le circuit de chiffrement / déchiffrement (215), de sorte par exemple à ne pouvoir être lues ou extraites de ce circuit de chiffrement / déchiffrement (215). Le circuit de chiffrement / déchiffrement (215) peut par exemple être doté d'un dispositif anti-effraction physique. Un dispositif anti-effraction physique est par exemple un détecteur de tentative de fraudes de types tension électrique, température, fréquence et lumière et un blindage actif. En cas d'attaque, le circuit de chiffrement est réinitialisé physiquement. Les données sensibles sont alors effacées. Par un tel dispositif anti-effraction physique, on obtient une protection physique de la clé de chiffrement / déchiffrement et des signatures numériques qui sont stockées dans le circuit de chiffrement / déchiffrement.

Le capteur (20) comprend en outre un processeur de communication (212) ou circuit embarqué (212) pour des opérations de traitement de données qui ne sont pas effectuées par le circuit de chiffrement (215) ou le circuit de déchiffrement (215).

Le processeur de communication est relié à un circuit (218) de gestion du capteur. Ce circuit met en œuvre les différentes fonctions de base du capteur. Le circuit (218) de gestion du capteur est par exemple configuré pour le stockage d'une table d'échange (217) dans laquelle sont stockées des données de gestion telles que : paramètres de fonctionnement du capteur, informations d'état de défaut technique, informations relatives à des alarmes, etc. Ces données de gestion sont utilisées pour répondre aux requêtes du dispositif de supervision. Ainsi une réponse à une requête peut comprendre tout ou partie des données stockées dans la table d'échange (217) ainsi que la signature numérique (216) du capteur.

Le processeur de communication et le circuit de chiffrement (215) et/ou le circuit de déchiffrement (215) peuvent faire partie d'un même circuit embarqué ou correspondre à des circuits physiquement distincts. Toute autre répartition des fonctions du capteur (20) entre un ou plusieurs circuits embarqués est envisageable.

Le capteur (20) comprend en outre une interface série (211) configurée pour l'émission et/ou la réception de trames de données via la liaison série (5) lors de la communication avec le dispositif de supervision (10). Cette interface série (211) est configurée pour recevoir via la liaison série en provenance du dispositif de supervision (10) une première trame de données conforme au protocole maître /esclave, la trame de données comprenant une adresse sur le bus série du capteur (20) et un message provenant du dispositif de supervision (10) et à destination du capteur (20). Le capteur (20) est configuré pour générer un message de réponse en réponse à un message provenant du dispositif de supervision (10).

Dans un ou plusieurs modes de réalisation, le message de réponse est chiffré par le circuit de chiffrement du capteur (20) au moyen de la clef de chiffrement (214) propre au capteur (20) considéré.

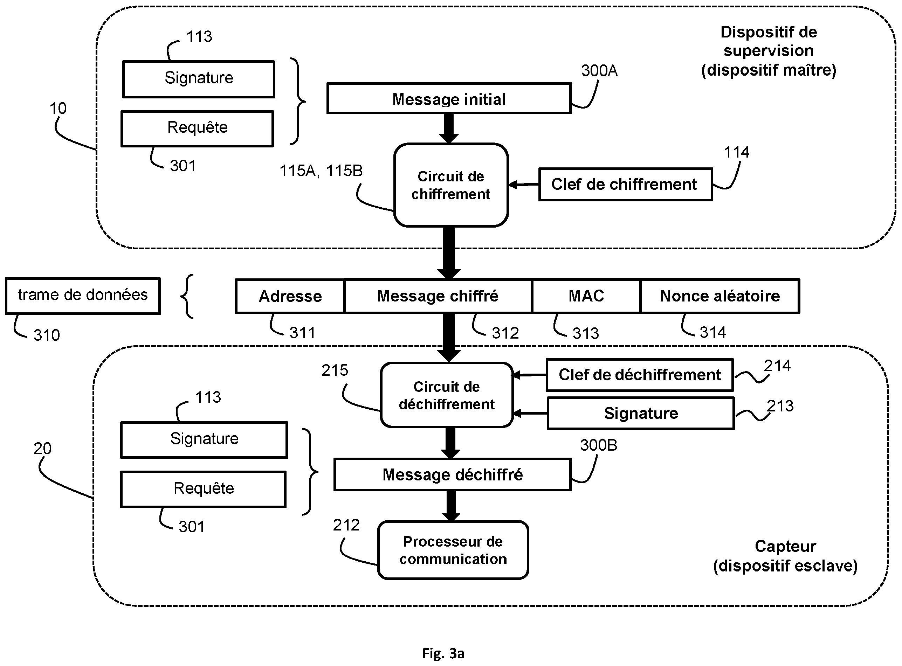

La fig. 3a illustre de manière schématique le traitement effectué sur un message à transmettre du dispositif de supervision (10) vers un capteur (20) lorsque ce message est chiffré.

Un message initial (300A) est généré au sein du dispositif de supervision (10), ce message initial (300A) comprend une requête (301) à traiter par le capteur (20) et la signature numérique (113) du dispositif de supervision.

Le message initial (300A) est chiffré par le circuit de chiffrement (115A) du dispositif de supervision (10) au moyen de la clef de chiffrement (114) associée au capteur (20), stockée dans le circuit de chiffrement (115A) du dispositif de supervision (10). L'algorithme de chiffrement est par exemple un chiffrement AES, avec compteur, par exemple de type CCM ou GCM. La longueur des blocs de données et/ou des clefs de chiffrement pour l'AES est par exemple de 128 bits.

La trame de données (310) à transmettre est générée au sein du dispositif de supervision (10) : cette trame de données (310) à transmettre comprend l'adresse (311) - sur le bus série - du capteur (20), le message chiffré (312) qui résulte du chiffrement du message initial (300A), un code d'authentification de message (313) (MAC, message authentification code) et un nonce aléatoire (314) utilisés lors du chiffrement. L'adresse (311) est non chiffrée.

Le nonce aléatoire (314) est généré par le dispositif de supervision (10) et est destiné à être utilisé une seule fois : le nonce aléatoire (314) change à chaque message à chiffrer. Le nonce aléatoire (314) permet de protéger la transmission contre les re-jeux. Les caractères aléatoire et unique de la génération du nonce aléatoire (314) sont garantis par la construction du circuit de chiffrement et respecte les exigences de l'algorithme AES. Un générateur de nombre aléatoire respectant les exigences normatives du NIST est utilisé pour calculer le nonce aléatoire (314). Le nonce aléatoire (314) est utilisé en tant que vecteur d'initialisation de l'algorithme AES de chiffrement et permet au capteur (20) de déchiffrer correctement le message chiffré (312).

Le code d'authentification de message (313) permet d'effectuer un contrôle d'intégrité et d'authentification du message chiffré (312). Le MAC est calculé lors du chiffrement. C'est une donnée de sortie de l'algorithme de chiffrement comme l'est le message chiffré (312). Côté capteur (20), le message chiffré (312), le nonce et le MAC sont des données d'entrée de l'algorithme déchiffrement qui, après recalcul du MAC compare le MAC reçu à celui calculé de sorte à réaliser le contrôle d'intégrité et l'authentification.

La trame de données (310) contenant le message chiffré (312) et l'adresse (311) non chiffrée est ensuite transmise par le dispositif de supervision via le bus série, reçue par le capteur (20) destinataire et décodée au sein de ce capteur (20).

Le message chiffré (312) est extrait de la trame de données (310) et est transmis au circuit de déchiffrement (215) du capteur (20). Le message chiffré (312) est déchiffré par le circuit de déchiffrement (215) du capteur (20) au moyen de la clef de déchiffrement (214) de sorte à générer un message déchiffré (300B). Un contrôle d'intégrité et d'authentification du message déchiffré (300B) est effectué au moyen du code d'authentification de message (MAC)(313) contenu dans la trame de données (310). Une authentification du dispositif de supervision (10) est effectuée au moyen de signature numérique (113) du dispositif de supervision (10) contenue dans le message déchiffré (300B), par comparaison avec la signature numérique (213) du dispositif de supervision (10) stockée dans le circuit de déchiffrement (215) du capteur (20).

Le message déchiffré (300B) est ensuite traité par le processeur de communication (212) du capteur (20) afin de générer une réponse à la requête (301) initiale.

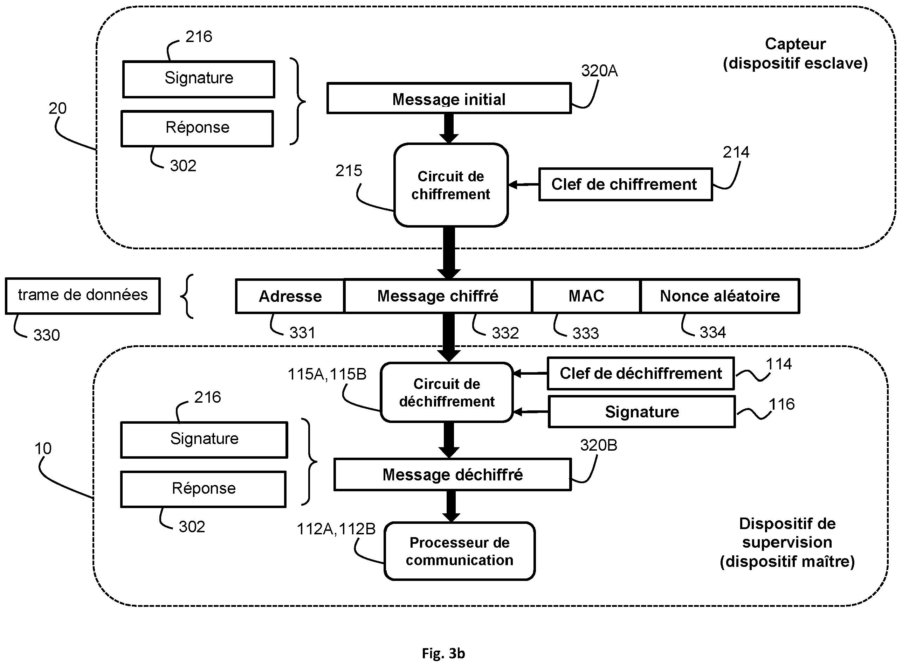

La fig. 3b illustre de manière schématique le traitement effectué sur une réponse (302) à transmettre par un capteur (20) au dispositif de supervision (10).

Un message initial (320A) est généré par le capteur (20), ce message initial (320A) comprenant une réponse (302) générée par le capteur (20) et la signature numérique (216) du capteur (20).

Le message initial (320A) est chiffré par le circuit de chiffrement (215) du capteur (20) au moyen de la clef de chiffrement (214) associée au dispositif de supervision (10), stockée dans le circuit de chiffrement du capteur (20). L'algorithme de chiffrement est par exemple un chiffrement AES, avec compteur, par exemple de type CCM ou GCM. La longueur des blocs de données et/ou des clefs de chiffrement pour l'AES est par exemple de 128 bits.

La trame de données (330) à transmettre est générée au sein du capteur (20) : cette trame de données (330) à transmettre comprend l'adresse (331) (non chiffrée) sur le bus série du capteur concerné (10), le message chiffré (332) qui résulte du chiffrement du message initial (320A), un code d'authentification de message (333) (MAC), message authentification code) et un nonce aléatoire (334) utilisés lors du chiffrement.

Le nonce aléatoire (334) est généré par le capteur (20) et est destiné à être utilisé une seule fois : le nonce aléatoire (334) change à chaque message à chiffrer. Le nonce aléatoire (334) permet de protéger la transmission contre les rejeux. Les caractères aléatoire et unique de la génération du nonce aléatoire (334) sont garantis par la construction du circuit de chiffrement et respecte les exigences de l'algorithme AES. Un générateur de nombre aléatoire respectant les exigences normatives du NIST est utilisé pour calculer le nonce aléatoire (334). Le nonce aléatoire (334) est utilisé en tant que vecteur d'initialisation de l'algorithme AES de chiffrement et permet au dispositif de supervision (10) de déchiffrer correctement le message chiffré (332).

Le code d'authentification de message (333) permet d'effectuer un contrôle d'intégrité et d'authentification du message chiffré (332). Le MAC est calculé lors du chiffrement. C'est une donnée de sortie de l'algorithme de chiffrement comme l'est le message chiffré (332). Côté dispositif de supervision (10), le message chiffré (332), le nonce et le MAC sont des données d'entrée de l'algorithme déchiffrement qui, après calcul du MAC compare le MAC reçu à celui calculé de sorte à réaliser le contrôle d'intégrité et l'authentification.

La trame de données (330) contenant le message chiffré (332) et l'adresse (331) non chiffrée est ensuite transmise par le capteur via le bus série, reçue par le dispositif de supervision (10) et décodée au sein du dispositif de supervision (10).

Le message chiffré (332) est extrait de la trame de données (330) et est transmis au circuit de déchiffrement (115A, 115B) du dispositif de supervision (10). Le message chiffré (332) est déchiffré par le circuit de déchiffrement (115A, 115B) du dispositif de supervision (10) au moyen de la clef de déchiffrement (114) propre au capteur (20) émetteur de la trame de données (330) de sorte à générer un message déchiffré (320B). Un contrôle d'intégrité et d'authentification du message déchiffré (320B) est effectué au moyen du code d'authentification de message (333) contenu dans la trame de données (330). Une authentification du capteur (20) est effectuée au moyen de signature numérique (216) du capteur (20) contenue dans le message déchiffré (320B), par comparaison avec la signature numérique (116) du capteur (20) stockée dans le circuit de déchiffrement (115A, 115B) du dispositif de supervision (10).

Le message déchiffré (320B) comprenant la réponse à la requête est ensuite traité par le processeur de communication (112A et/ou 112B selon l'interface de communication concernée) du dispositif de supervision (10).

De par les mesures apportées, les avantages suivants sont apportés.

La confidentialité des messages est assurée par chiffrement. Ce chiffrement suit les recommandations de l'ANSSI (Agence Nationale de la Sécurité des Systèmes d'Information): AES128 par blocs de 128 octets par exemple pour un niveau de confidentialité « Secret ». L'authentification et l'intégrité des messages est assurée par un algorithme recommandé par l'ANSSI comme le CCM ou le GCM associé à l'AES 128. Ce type d'algorithme de chiffrement symétrique ne nécessite pas de seconde clef et permet une gestion de clefs automatique.

Le vecteur d'initialisation aléatoire (nonce aléatoire) n'est utilisé qu'une seule fois avec une même clef de manière à éviter les attaques par rejeux ou par message à contenu connu et constant typique d'une communication JBus. Le caractère « aléatoire » de la génération du « nonce » est assuré par construction du circuit de chiffrement et respecte les exigences de la norme AES éditée par le NIST (National Institute of Standards and Technology).

La non répudiation d'un message est assurée par l'usage d'une signature numérique. Une protection contre le clonage des capteurs (20) et/ou du dispositif de supervision (10) (attaque « Man in the Middle ») et contre les piratages est ainsi également obtenue.

Seule la partie « données utiles » des trames de données est chiffrée, mais pas l'adresse sur le bus série du capteur (20), évitant un décodage systématique des trames de données par tous les capteurs (20). Cela permet de limiter le temps de réponse. En pratique, le chiffrement de l'adresse d'un capteur (20) n'est pas utile. Un tel chiffrement n'empêcherait pas la saturation du bus par un simulateur utilisant la bande passante (déni de service). L'écoute du bus ne permet plus de connaître le type de capteur (20) et le contenu des messages. Seul le nombre de capteurs (20) pourrait être décelé.

Ainsi la communication via le bus série asynchrone de type RS485, RS232 ou RS422 s'affranchit des menaces précédemment citées, et en même temps offre la reconnaissance simple de l'adresse du capteur (20) destinataire par chacun des dispositifs esclaves des capteurs (20) sans avoir à la déchiffrer et, enfin, conserve la sécurisation si une encapsulation IP ou radio sans chiffrement est réalisée en amont ou en aval du réseau « série ».

Le chiffrement retenu est de préférence un algorithme de chiffrement symétrique de type AES 128 CCM ou GCM pour les raisons principales suivantes. Cela permet un dimensionnement de la clef et un temps de calcul raisonnables (100 à 1000 fois plus rapide qu'un chiffrement asymétrique comme le RSA de niveau comparable au niveau sûreté) en termes de mise en œuvre, de temps de calcul et de consommation.

Avec un algorithme de chiffrement symétrique, une seule et même clef de chiffrement est utilisée pour le chiffrement/déchiffrement par le capteur (20) et le dispositif de supervision (10) dont la possession et l'utilisation assurent la non répudiation. Avec les modes GCM ou CCM cette clef de chiffrement peut être renouvelée automatiquement, de façon périodique ou selon tout schéma temporel adapté, par le dispositif de supervision (10) sans qu'un tiers n'ait à connaître cette clef dispositif de supervision (10) : le dispositif de supervision (10) peut envoyer une trame de données comprenant un message chiffré avec la nouvelle clef de chiffrement au capteur (20) considéré. Un message chiffré peut servir également à transmettre la taille du nonce aléatoire au capteur (20) considéré. Ainsi une gestion automatisée des clefs de chiffrement par le superviseur est possible vis à vis de l'algorithme implémenté et/ou de la taille du nonce aléatoire.

Pour la protection physique (protection électrique et/ou électromagnétique) de la clé de chiffrement/déchiffrement, le circuit dédié de chiffrement/déchiffrement intègre un dispositif anti-effraction de type détecteur de fraudes de types tension électrique, température, fréquence et lumière et un blindage actif. En cas d'attaque, le circuit est réinitialisé physiquement. Les données sensibles sont alors effacées.

Les vulnérabilités de type saturation/perturbation de la liaison série et/ ou du capteur (20) sont traitées physiquement par la surveillance de la communication et la génération d'une alerte par le dispositif de supervision (10) en cas d'absence de réponse d'un ou plusieurs capteurs (20). La vulnérabilité relative à la rupture de la liaison de communication est résolue par l'ajout de la deuxième interface de communication (112) (interface retour (112)) décrite dans ce document.

Côté capteurs (20) (dispositifs esclaves), on peut noter les avantages suivants. Un chiffrement / déchiffrement symétrique de type AES128 CCM ou GCM par un processeur embarqué ou circuit sécurisé dédié à l'aide d'une clef de chiffrement, unique et propre au capteur (20), préinstallée lors d'une phase d'enrôlement en usine ou installée in situ de manière indépendante et automatique.

Côté dispositif de supervision (dispositif maître), on peut noter les avantages suivants. Un chiffrement / déchiffrement symétrique de type AES128 CCM ou GCM par processeur embarqué ou élément sécurisé à l'aide d'une clef de chiffrement unique préinstallée lors d'une phase d'enrôlement en usine ou installée in situ de manière indépendante et automatique. Une sécurisation du bus série au moyen d'une électronique indépendante (interfaces « départ » et « retour ») dispositif de supervision (10). L'appairage « maître / esclave » est quasiment certain à 2¹²⁸ chances près.

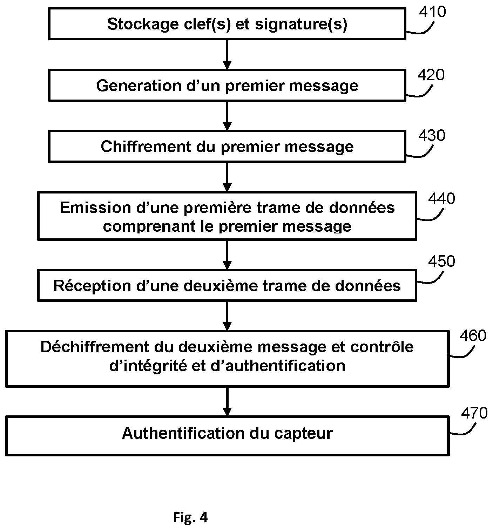

La figure 4 représente de manière schématique un organigramme d'un procédé de communication adapté pour un dispositif de supervision. La communication s'effectue via une liaison série asynchrone selon un protocole maître /esclave.

Bien que les étapes soient décrites de manière séquentielle, les étapes peuvent être exécutées dans un ordre différent et/ou en parallèle. Certaines étapes peuvent être répétées ou être omises. Les caractéristiques et aspects du traitement de données décrits dans ce document notamment par référence à la figure 3a ou 3b sont applicables à la mise en œuvre de ce procédé. Les caractéristiques et aspects du dispositif de supervision décrits dans ce document notamment par référence à la figure 2a sont applicables au dispositif de supervision mettant en œuvre ce procédé.

Lors d'une étape 410, un circuit de chiffrement (115A) du dispositif de supervision effectue un stockage d'une signature numérique (113) du dispositif de supervision et d'une clef de chiffrement (114) propre à un premier capteur (20). Un circuit de déchiffrement (115A) du dispositif de supervision effectue un stockage d'une signature numérique (116) du premier capteur (20) et d'une clef de déchiffrement (114) propre au premier capteur (20).

Lors d'une étape 420, un premier message (300A) est généré, le premier message (300A) comprenant une requête (301) à traiter par le premier capteur (20) et optionnellement la signature numérique (113) du dispositif de supervision. La requête peut être une requête de remplacement d'une clef de chiffrement (214) courante stockée dans un circuit de chiffrement (215) du capteur par la nouvelle clef de chiffrement : dans ce cas le premier message comprend la nouvelle clef de chiffrement.

Lors d'une étape 430, lorsque le premier message à envoyer au premier capteur doit être chiffré, un chiffrement du premier message (300A) est effectué par le circuit de déchiffrement (115A) du dispositif de supervision au moyen de la clef de chiffrement (114) propre au premier capteur (20). Un message chiffré (312) ainsi qu'un code d'authentification de message (313) et un nonce aléatoire (314) associés sont obtenus.

Lors d'une étape 440, une première trame de données conforme au protocole maître /esclave est émise via la liaison série asynchrone à destination d'un premier capteur (20). La première trame de données (310) comprend une adresse (311) non chiffrée du premier capteur (20), le premier message (312), chiffré ou non chiffré selon qu'un chiffrement a eu lieu à l'étape 430. Si le message est chiffré, la première trame de données (310) comprend le code d'authentification de message (313) et le nonce aléatoire (314) associés obtenus à l'étape 430.

Lors d'une étape 450, une deuxième trame de données (330) conforme au protocole maître /esclave est reçue via la liaison série asynchrone en provenance du premier capteur (20). La deuxième trame de données (330) comprend une adresse (331) non chiffrée du dispositif de supervision (10), un message chiffré (332) et un code d'authentification de message (333). Le message chiffré (332) résulte d'un chiffrement d'un deuxième message (320A) comprenant une signature numérique (216) du premier capteur (20) et une réponse (302) à la requête.

Lors d'une étape 460, le circuit de déchiffrement du dispositif de supervision effectue un déchiffrement du message chiffré (332) au moyen de la clef de déchiffrement (114) propre au premier capteur (20) pour générer un message déchiffré (320B). Le circuit de déchiffrement (115A) effectue en outre un contrôle d'intégrité et d'authentification du message déchiffré (320B) au moyen du code d'authentification de message (333). Dans le cas d'une non authentification du message, une alerte est générée par le processeur de communication (112A, 112B) du dispositif de supervision.

Lors d'une étape 470, une authentification du premier capteur (20) est effectuée à partir du message déchiffré (320B) et de la signature numérique (116) du capteur stocké dans le circuit de déchiffrement (115A) du dispositif de supervision. Dans le cas d'une non authentification du capteur, une alerte est générée par le processeur de communication (112A, 112B) du dispositif de supervision.

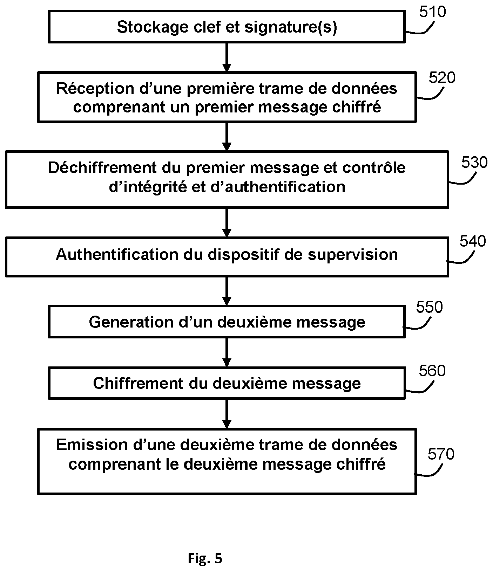

La figure 5 représente de manière schématique un organigramme d'un procédé de communication adapté pour un capteur. La communication s'effectue via une liaison série asynchrone selon un protocole maître /esclave.

Bien que les étapes soient décrites de manière séquentielle, les étapes peuvent être exécutées dans un ordre différent et/ou en parallèle. Certaines étapes peuvent être répétées ou être omises. Les caractéristiques et aspects du traitement de données décrits dans ce document notamment par référence à la figure 3a ou 3b sont applicables à la mise en œuvre de ce procédé. Les caractéristiques et aspects du capteur (20) décrits dans ce document notamment par référence à la figure 2b sont applicables au capteur mettant en œuvre ce procédé.

Lors d'une étape 510, un circuit de chiffrement (215) du capteur effectue un stockage (510) d'une signature numérique (216) du capteur (20) et d'une clef de chiffrement (214) propre au capteur (20). Un circuit de déchiffrement (215) du capteur effectue un stockage (510) d'une signature numérique (213) du dispositif de supervision (10) et d'une clef de déchiffrement (214) propre au capteur (20).

Lors d'une étape 520, une première trame de données (310) conforme au protocole maître /esclave est reçue via la liaison série asynchrone en provenance du dispositif de supervision (10). La première trame de données (310) comprenant une adresse non chiffrée du premier capteur (20) et un premier message, le premier message comprenant une requête à traiter par le capteur (20).

Lors d'une étape 530, lorsque le premier message est un message chiffré (312) résultant d'un chiffrement d'un message initial comprenant la requête (301) à traiter par le premier capteur (20), la première trame de données (310) comprend en outre un code d'authentification de message (313) et un nonce aléatoire (314). Un déchiffrement est effectué par un circuit de déchiffrement (215) du capteur (20) de sorte à générer un message déchiffré et un contrôle d'intégrité et d'authentification par le circuit de déchiffrement (215) du message déchiffré (300B) au moyen du code d'authentification de message (313).

Lors d'une étape 540, une authentification du dispositif de supervision peut en outre être effectuée à partir du message déchiffré (300B) et de la signature numérique (213) du dispositif de supervision stockée dans le circuit de déchiffrement (215) du capteur.

Lors d'une étape 550, un deuxième message (320A) comprenant une réponse (302) à la requête et, optionnellement, une signature numérique (216) du capteur (20) est généré si le message de requête a bien été authentifié pour son contenu et, optionnellement, pour sa source au moyen de la signature numérique du dispositif de supervision. Sinon le capteur ne répond pas et se place en attente d'un nouveau message.

Lors d'une étape 560, une génération (530) par le circuit de chiffrement (215) d'un message chiffré (332) est effectuée par chiffrement du deuxième message (320A) au moyen de la clef de chiffrement (214) propre au capteur (20). Un message chiffré (332) ainsi qu'un code d'authentification de message (333) et un nonce aléatoire (334) associés sont obtenus.

Lors d'une étape 570, une deuxième trame de données (330) conforme au protocole maître /esclave est émise via la liaison série asynchrone à destination du dispositif de supervision (10). La deuxième trame de données (330) comprend une adresse (331) non chiffrée du capteur, le message chiffré (332), ainsi que le code d'authentification de message (333) et un nonce aléatoire (334) associés obtenus à l'étape 560.

Une sécurisation de la liaison série RS485, RS422 ou RS232 est obtenu d'une manière adaptée à des dispositifs de type capteurs de faible puissance de calcul et de faible consommation d'énergie. Les délais de transmission des trames de données ne sont pas affectés. La solution décrite ici ne nécessite qu'une faible puissance de calcul, une faible consommation d'énergie et une faible augmentation du débit de la liaison série. Aucune liaison supplémentaire n'est nécessaire pour la mise à jour des clefs de chiffrement.

En outre la solution décrite ici est utilisable pour les capteurs de générations précédentes grâce à l'implémentation de circuits de chiffrement / déchiffrement interfacés avec l'interface de communication via la liaison série mais qui ne modifie pas le protocole maitre / esclave, ni la partie acquisition du capteur : l'adresse est non chiffrée, seul le message contenant les informations remontées par le capteur est chiffré. Le dispositif de supervision et les capteurs continuent à communiquer selon le protocole maître / esclave (par exemple le protocole JBus), les messages standards sont encapsulés dans des messages chiffrés.

## Revendications

1. Dispositif de supervision (10) configuré pour communiquer avec au moins un capteur (20) via une liaison série asynchrone de type RS485, RS232 ou RS422 selon un protocole maître /esclave,
le dispositif de supervision (10) comprenant :
- une première interface de communication (110A) configurée pour émettre via la liaison série asynchrone à destination d'un premier capteur (20) une première trame de données conforme au protocole maître /esclave, la première trame de données (310) comprenant une adresse non chiffrée (311) du premier capteur (20) et un premier message (312), le premier message (300A) comprenant une requête (301) à traiter par le premier capteur (20) ;
- la première interface de communication (110A) étant configurée pour recevoir, via la liaison série asynchrone en provenance du premier capteur (20), une deuxième trame de données (330) conforme au protocole maître /esclave, la deuxième trame de données (330) comprenant une adresse (331) non chiffrée du premier capteur et un message chiffré (332), le message chiffré résultant d'un chiffrement d'un deuxième message (320A) le deuxième message (320A) comprenant une signature numérique (216) du premier capteur (20), propre au premier capteur (20), et une réponse (302) à la requête;
- un circuit de déchiffrement (115A) configuré pour stocker une clef de déchiffrement (114) propre au premier capteur (20); déchiffrer le message chiffré (332) au moyen de la clef de déchiffrement (114) propre au premier capteur (20) pour générer un message déchiffré (320B) ; stocker une signature numérique (116) du premier capteur (20) et authentifier le premier capteur (20) à partir du message déchiffré (320B) et de la signature numérique (116) stockée dans le circuit de déchiffrement (115A).

2. Dispositif de supervision (10) selon la revendication 1, la deuxième trame de données (330) comprenant un code d'authentification de message (333), le circuit de déchiffrement (115A) étant configuré pour effectuer un contrôle d'intégrité et d'authentification du message déchiffré (320B) au moyen du code d'authentification de message (333).

3. Dispositif de supervision (10) selon la revendication 1 ou 2, le premier message étant un message chiffré (312) résultant d'un chiffrement d'un message initial (300A) comprenant la requête (301) à traiter par le premier capteur (20) et une signature numérique (113) du dispositif de supervision (10), la première trame de données (310) comprenant un code d'authentification de message (313), le dispositif de supervision comprenant
- un circuit de chiffrement (115A) configuré pour stocker la signature numérique (113) du dispositif de supervision (10) et une clef de chiffrement (114) propre au premier capteur (20) et pour chiffrer le message initial (300A) au moyen de la clef de chiffrement (114) de sorte à générer le premier message (312) et générer le code d'authentification de message (313).

4. Dispositif de supervision (10) selon la revendication 3, le message initial comprenant une nouvelle clef de chiffrement propre au premier capteur et la requête étant une requête de remplacement d'une clef de chiffrement (214) courante stockée dans un circuit de chiffrement (215) du capteur par la nouvelle clef de chiffrement.

5. Dispositif de supervision (10) selon l'une quelconque des revendications 1 à 4, le premier message étant un message chiffré (312) résultant d'un chiffrement d'un message initial (300A) comprenant la requête (301) à traiter par le premier capteur (20) et une signature numérique (113) du dispositif de supervision (10), le dispositif de supervision comprenant
- une deuxième interface de communication (110B) reliée à la première interface de communication (110A) via une liaison (119) interne au dispositif de supervision (10) et connecté à l'autre extrémité de la liaison série asynchrone (5) par rapport à la première interface de communication (110A), la deuxième interface de communication (110B) étant configurée pour détecter sur la liaison série asynchrone une trame de données retour résultant de la transmission via la liaison série asynchrone de la première trame de données (310);
le dispositif de supervision (10) étant configuré pour comparer la première trame de données (310) avec la trame de données retour et déclencher une opération en cas de différence entre la première trame de données (310) et la trame de données retour et/ou en cas d'absence de trame de données retour.

6. Dispositif de supervision (10) selon la revendication 5, le dispositif de supervision (10) étant configuré pour détecter une rupture de la liaison série asynchrone en un point de rupture situé en amont du premier capteur (20) en cas d'absence de réponse du premier capteur (20) à la requête,
la deuxième interface de communication (110B) étant configurée pour, en cas de détection de la rupture, se substituer à la première interface de communication (110A) de sorte à émettre via la liaison série asynchrone une troisième trame de données conforme au protocole maître /esclave à destination du premier capteur (20) situé en aval du point de rupture, la troisième trame de données (310) comprenant une adresse (311) non chiffrée du premier capteur (20) et une nouvelle requête (301) à traiter par le premier capteur (20).

7. Capteur (20) configuré pour communiquer avec un dispositif de supervision (10) via une liaison série asynchrone de type RS485, RS232 ou RS422 selon un protocole maître /esclave,
le capteur (20) comprenant :
- une interface de communication (211) configurée pour recevoir via la liaison série asynchrone en provenance du dispositif de supervision (10) une première trame de données (310) conforme au protocole maître /esclave, la première trame de données (310) comprenant une adresse non chiffrée du premier capteur (20) et un premier message, le premier message comprenant une requête à traiter par le capteur (20) ;
- un circuit de chiffrement (215) configuré pour stocker une clef de chiffrement (214) propre au capteur (20) ;
- le circuit de chiffrement (215) étant configuré pour stocker une signature numérique (216) du capteur , propre au capteur (20), et générer un message chiffré (332) par chiffrement d'un deuxième message (320A) au moyen de la clef de chiffrement (214) propre au capteur (20), le deuxième message comprenant une réponse (302) à la requête, et comprenant la signature numérique (216) du capteur (20);
- l'interface de communication (211) étant configurée pour émettre, via la liaison série asynchrone à destination du dispositif de supervision (10), une deuxième trame de données (330) conforme au protocole maître /esclave, la deuxième trame de données (330) comprenant une adresse (331) non chiffrée du capteur et le message chiffré (332).

8. Capteur (20) selon la revendication 7, le premier message étant un message chiffré (312) résultant d'un chiffrement d'un message initial (300A) comprenant la requête (301) à traiter par le premier capteur (20), la première trame de données (310) comprenant un code d'authentification de message (313),
le capteur (20) comprenant un circuit de déchiffrement (215) configuré pour déchiffrer le message chiffré (312) de sorte à générer un message déchiffré et pour effectuer un contrôle d'intégrité et d'authentification du message déchiffré (300B) au moyen du code d'authentification de message (313).

9. Capteur (20) selon la revendication 8, le message initial (300A) comprenant une nouvelle clef de chiffrement propre au premier capteur et la requête étant une requête de remplacement de la clef de chiffrement (214) courante stockée dans le circuit de chiffrement (215) du capteur par la nouvelle clef de chiffrement.

10. Système de détection d'intrusion comprenant un dispositif de supervision selon l'une quelconque des revendications 1 à 6 et au moins un capteur selon l'une quelconque des revendications 7 à 9, ledit au moins un capteur étant un capteur de détection d'intrusion.

11. Procédé de communication destiné à être mis en œuvre par un dispositif de supervision (10) configuré pour communiquer avec au moins un capteur (20) via une liaison série asynchrone de type RS485, RS232 ou RS422 selon un protocole maître /esclave, le procédé de communication comprenant :
- un stockage (410) par un circuit de déchiffrement (115A) d'une signature numérique (116) du premier capteur (20) et d'une clef de déchiffrement (114) propre au premier capteur (20);
- une émission (440) via la liaison série asynchrone à destination d'un premier capteur (20) d'une première trame de données conforme au protocole maître /esclave, la première trame de données (310) comprenant une adresse (311) non chiffrée du premier capteur (20) et un premier message (312), le premier message (300A) comprenant une requête (301) à traiter par le premier capteur (20) ;
- une réception (450), via la liaison série asynchrone en provenance du premier capteur (20), d'une deuxième trame de données (330) conforme au protocole maître /esclave, la deuxième trame de données (330) comprenant une adresse (331) non chiffrée du premier capteur (10) et un message chiffré (332), le message chiffré résultant d'un chiffrement d'un deuxième message (320A) comprenant une signature numérique (216) du premier capteur (20), propre au premier capteur (20), et une réponse (302) à la requête;
- un déchiffrement (460) par le circuit de déchiffrement du message chiffré (332) au moyen de la clef de déchiffrement (114) propre au premier capteur (20) pour générer un message déchiffré (320B) ;
- une authentification (470) du premier capteur (20) à partir du message déchiffré (320B) et de la signature numérique (116) stockée dans le circuit de déchiffrement (115A).

12. Procédé de communication destiné à être mis en œuvre par un capteur (20) configuré pour communiquer avec un dispositif de supervision (10) via une liaison série asynchrone de type RS485, RS232 ou RS422 selon un protocole maître /esclave, le procédé comprenant :
- un stockage (510) par un circuit de chiffrement (215) d'une signature numérique (216) du capteur (20), propre au capteur (20), et d'une clef de chiffrement (214) propre au capteur (20) ;
- une réception (520) via la liaison série asynchrone en provenance du dispositif de supervision (10) d'une première trame de données (310) conforme au protocole maître /esclave, la première trame de données (310) comprenant une adresse non chiffrée du premier capteur (20) et un premier message, le premier message comprenant une requête à traiter par le capteur (20) ;
- une génération (560) par le circuit de chiffrement (215) d'un message chiffré (332) par chiffrement d'un deuxième message (320A) au moyen de la clef de chiffrement (214) propre au capteur (20), le deuxième message (320A) comprenant une réponse (302) à la requête et la signature numérique (216) du capteur (20);
- une émission (570), via la liaison série asynchrone à destination du dispositif de supervision (10), d'une deuxième trame de données (330) conforme au protocole maître /esclave, la deuxième trame de données (330) comprenant une adresse (331) non chiffrée du capteur et le message chiffré (332).

13. Procédé selon la revendication 12, le premier message étant un message chiffré (312) résultant d'un chiffrement d'un message initial comprenant la requête (301) à traiter par le premier capteur (20), la première trame de données (310) comprenant un code d'authentification de message (313),
le procédé comprenant en outre
- un déchiffrement (530) par un circuit de déchiffrement (215) du capteur (20) du message chiffré (312) de sorte à générer un message déchiffré (300B) et un contrôle d'intégrité et d'authentification par le circuit de déchiffrement (215) du message déchiffré (300B) au moyen du code d'authentification de message (313).

## Patentansprüche

1. Überwachungsvorrichtung (10), die konfiguriert ist, um über eine asynchrone Serienverbindung vom Typ RS485, RS232 oder RS422 mit mindestens einem Sensor (20) gemäß einem Master/Slave-Protokoll zu kommunizieren,
wobei die Überwachungsvorrichtung (10) umfasst:
- eine erste Kommunikationsschnittstelle (110A), die konfiguriert ist, um über die asynchrone Serienverbindung einen ersten Datenrahmen an einen ersten Sensor (20) gemäß dem Master/Slave-Protokoll zu senden, wobei der erste Datenrahmen (310) eine unverschlüsselte Adresse (311) des ersten Sensors (20) und eine erste Nachricht (312) umfasst, wobei die erste Nachricht (300A) eine von dem ersten Sensor (20) zu verarbeitende Anfrage (301) umfasst;
- wobei die erste Kommunikationsschnittstelle (110A) konfiguriert ist, um über die asynchrone Serienverbindung vom ersten Sensor (20) einen zweiten Datenrahmen (330) gemäß dem Master/Slave-Protokoll zu empfangen, wobei der zweite Datenrahmen (330) eine unverschlüsselte Adresse (331) des ersten Sensors und eine verschlüsselte Nachricht (332) umfasst, wobei die verschlüsselte Nachricht aus einer Verschlüsselung einer zweiten Nachricht (320A) resultiert, wobei die zweite Nachricht (320A) eine dem ersten Sensor (20) gewidmete digitale Signatur (216) des ersten Sensors (20) und eine Antwort (302) auf die Anfrage umfasst;
- eine Entschlüsselungsschaltung (115A), die konfiguriert ist, um einen dem ersten Sensor (20) gewidmeten Entschlüsselungsschlüssel (114) zu speichern; die verschlüsselte Nachricht (332) mittels des dem ersten Sensor (20) gewidmeten Entschlüsselungsschlüssels (114) zu entschlüsseln, um eine entschlüsselte Nachricht (320B) zu erzeugen; eine digitale Signatur (116) des ersten Sensors (20) zu speichern und den ersten Sensor (20) anhand der entschlüsselten Nachricht (320B) und der in der Entschlüsselungsschaltung (115A) gespeicherten digitalen Signatur (116) zu authentifizieren.

2. Überwachungsvorrichtung (10) nach Anspruch 1, wobei der zweite Datenrahmen (330) einen Nachrichtenauthentifizierungscode (333) umfasst, wobei die Entschlüsselungsschaltung (115A) konfiguriert ist, um mittels des Nachrichtenauthentifizierungscodes (333) eine Integritäts- und Authentifizierungsprüfung der entschlüsselten Nachricht (320B) durchzuführen.

3. Überwachungsvorrichtung (10) nach Anspruch 1 oder 2, wobei die erste Nachricht eine verschlüsselte Nachricht (312) ist, die aus einer Verschlüsselung einer ursprünglichen Nachricht (300A) resultiert, welche die von dem ersten Sensor (20) zu verarbeitende Anfrage (301) und eine digitale Signatur (113) der Überwachungsvorrichtung (10) umfasst, wobei der erste Datenrahmen (310) einen Nachrichtenauthentifizierungscode (313) umfasst, wobei die Überwachungsvorrichtung umfasst:
- eine Verschlüsselungsschaltung (115A), die konfiguriert ist, um die digitale Signatur (113) der Überwachungsvorrichtung (10) und einen dem ersten Sensor (20) gewidmeten Verschlüsselungsschlüssel (114) zu speichern und um die ursprüngliche Nachricht (300A) mittels des Verschlüsselungsschlüssels (114) derart zu verschlüsseln, dass die erste Nachricht (312) erzeugt wird und der Nachrichtenauthentifizierungscode (313) erzeugt wird.

4. Überwachungsvorrichtung (10) nach Anspruch 3, wobei die ursprüngliche Nachricht einen dem ersten Sensor gewidmeten neuen Verschlüsselungsschlüssel umfasst und die Anfrage eine Anfrage ist, einen aktuellen Verschlüsselungsschlüssel (214), der in einer Verschlüsselungsschaltung (215) des Sensors gespeichert ist, durch den neuen Verschlüsselungsschlüssel zu ersetzen.

5. Überwachungsvorrichtung (10) nach einem der Ansprüche 1 bis 4, wobei die erste Nachricht eine verschlüsselte Nachricht (312) ist, die aus einer Verschlüsselung einer ursprünglichen Nachricht (300A) resultiert, welche die von dem ersten Sensor (20) zu verarbeitende Anfrage (301) und eine digitale Signatur (113) der Überwachungsvorrichtung (10) umfasst, wobei die Überwachungsvorrichtung umfasst:
- eine zweite Kommunikationsschnittstelle (110B), die über eine innerhalb der Überwachungsvorrichtung (10) befindliche Verbindung (119) mit der ersten Kommunikationsschnittstelle (110A) verbunden ist und mit dem bezüglich der ersten Kommunikationsschnittstelle (110A) anderen Ende der asynchronen Serienverbindung (5) verbunden ist, wobei die zweite Kommunikationsschnittstelle (110B) konfiguriert ist, um auf der asynchronen Serienverbindung einen zurückgesendeten Datenrahmen zu erfassen, der aus der Übertragung des ersten Datenrahmens (310) über die asynchrone Serienverbindung resultiert;
wobei die Überwachungsvorrichtung (10) konfiguriert ist, um den ersten Datenrahmen (310) mit dem zurückgesendeten Datenrahmen zu vergleichen und bei einem Unterschied zwischen dem ersten Datenrahmen (310) und dem zurückgesendeten Datenrahmen und/oder bei Fehlen eines zurückgesendeten Datenrahmens einen Vorgang auszulösen.

6. Überwachungsvorrichtung (10) nach Anspruch 5, wobei die Überwachungsvorrichtung (10) konfiguriert ist, um bei Fehlen einer Antwort des ersten Sensors (20) auf die Anfrage eine Unterbrechung der asynchronen Serienverbindung an einem dem ersten Sensor (20) vorgelagerten Unterbrechungspunkt zu erkennen,
wobei die zweite Kommunikationsschnittstelle (110B) konfiguriert ist, um sich bei Erkennen der Unterbrechung die erste Kommunikationsschnittstelle (110A) derart zu ersetzen, dass sie über die asynchrone Serienverbindung einen dritten Datenrahmen gemäß dem Master/Slave-Protokoll an den dem Unterbrechungspunkt nachgelagerten ersten Sensor (20) sendet, wobei der dritte Datenrahmen (310) eine unverschlüsselte Adresse (311) des ersten Sensors (20) und eine neue von dem ersten Sensor (20) zu verarbeitende Anfrage (301) umfasst.

7. Sensor (20), der konfiguriert ist, um über eine asynchrone Serienverbindung vom Typ RS485, RS232 oder RS422 mit einer Überwachungsvorrichtung (10) gemäß einem Master/Slave-Protokoll zu kommunizieren,
wobei der Sensor (20) umfasst:
- eine Kommunikationsschnittstelle (211), die konfiguriert ist, um über die asynchrone Serienverbindung von der Überwachungsvorrichtung (10) einen ersten Datenrahmen (310) gemäß dem Master/Slave-Protokoll zu empfangen, wobei der erste Datenrahmen (310) eine unverschlüsselte Adresse des ersten Sensors (20) und eine erste Nachricht umfasst, wobei die erste Nachricht eine von dem Sensor (20) zu verarbeitende Anfrage umfasst;
- eine Verschlüsselungsschaltung (215), die konfiguriert ist, um einen dem Sensor (20) gewidmeten Verschlüsselungsschlüssel (214) zu speichern;
- wobei die Verschlüsselungsschaltung (215) konfiguriert ist, um eine dem Sensor (20) gewidmete digitale Signatur (216) des Sensors zu speichern und durch Verschlüsselung einer zweiten Nachricht (320A) mittels des dem Sensor (20) gewidmeten Verschlüsselungsschlüssels (214) eine verschlüsselte Nachricht (332) zu erzeugen, wobei die zweite Nachricht eine Antwort (302) auf die Anfrage umfasst und die digitale Signatur (216) des Sensors (20) umfasst:
- die Kommunikationsschnittstelle (211), die konfiguriert ist, um über die asynchrone Serienverbindung einen zweiten Datenrahmen (330) gemäß dem Master/Slave-Protokoll an die Überwachungsvorrichtung (10) zu senden, wobei der zweite Datenrahmen (330) eine unverschlüsselte Adresse (331) des Sensors und die verschlüsselte Nachricht (332) umfasst.

8. Sensor (20) nach Anspruch 7, wobei die erste Nachricht eine verschlüsselte Nachricht (312) ist, die aus einer Verschlüsselung einer ursprünglichen Nachricht (300A) resultiert, welche die von dem ersten Sensor (20) zu verarbeitende Anfrage (301) umfasst, wobei der erste Datenrahmen (310) einen Nachrichtenauthentifizierungscode (313) umfasst,
wobei der Sensor (20) eine Entschlüsselungsschaltung (215) umfasst, die konfiguriert ist, um die verschlüsselte Nachricht (312) derart zu entschlüsseln, dass eine entschlüsselte Nachricht erzeugt wird, und eine Integritäts- und Authentifizierungsprüfung der entschlüsselten Nachricht (300B) mittels des Nachrichtenauthentifizierungscodes (313) durchzuführen.

9. Sensor (20) nach Anspruch 8, wobei die ursprüngliche Nachricht (300A) einen neuen dem ersten Sensor gewidmeten Verschlüsselungsschlüssel umfasst und die Anfrage eine Anfrage ist, den aktuellen Verschlüsselungsschlüssel (214), der in einer Verschlüsselungsschaltung (215) des Sensors gespeichert ist, durch den neuen Verschlüsselungsschlüssel zu ersetzen.

10. Einbruchserkennungssystem, umfassend eine Überwachungsvorrichtung nach einem der Ansprüche 1 bis 6 und mindestens einen Sensor nach einem der Ansprüche 7 bis 9, wobei der mindestens eine Sensor ein Einbruchserkennungssensor ist.

11. Kommunikationsverfahren zur Implementierung durch eine Überwachungsvorrichtung (10), die konfiguriert ist, um über eine asynchrone Serienverbindung vom Typ RS485, RS232 oder RS422 mit mindestens einem Sensor (20) gemäß einem Master/Slave-Protokoll zu kommunizieren, wobei das Kommunikationsverfahren umfasst:
- Speichern (410) einer digitalen Signatur (116) des ersten Sensors (20) und eines dem ersten Sensor (20) gewidmeten Entschlüsselungsschlüssels (114) durch eine Entschlüsselungsschaltung (115A);
- Senden (440) eines ersten Datenrahmens gemäß dem Master/Slave-Protokoll über die asynchrone Serienverbindung an einen ersten Sensor (20), wobei der erste Datenrahmen (310) eine unverschlüsselte Adresse (311) des ersten Sensors (20) und eine erste Nachricht (312) umfasst, wobei die erste Nachricht (300A) eine von dem ersten Sensor (20) zu verarbeitende Anfrage (301) umfasst;
- Empfangen (450) eines zweiten Datenrahmens (330) gemäß dem Master/Slave-Protokoll über die asynchrone Serienverbindung vom ersten Sensor (20), wobei der zweite Datenrahmen (330) eine unverschlüsselte Adresse (331) des ersten Sensors (10) und eine verschlüsselte Nachricht (332) umfasst, wobei die verschlüsselte Nachricht aus einer Verschlüsselung einer zweiten Nachricht (320A) resultiert, die eine dem ersten Sensor (20) gewidmeten digitale Signatur (216) des ersten Sensors (20) und eine Antwort (302) auf die Anfrage umfasst;
- Entschlüsseln (460) der verschlüsselten Nachricht (332) durch die Entschlüsselungsschaltung mittels des dem ersten Sensor (20) gewidmeten Entschlüsselungsschlüssels (114), um eine entschlüsselte Nachricht (320B) zu erzeugen;
- Authentifizieren (470) des ersten Sensors (20) anhand der entschlüsselten Nachricht (320B) und der digitalen Signatur (116), die in der Entschlüsselungsschaltung (115A) gespeichert ist.

12. Kommunikationsverfahren zur Implementierung durch einen Sensor (20), der konfiguriert ist, um über eine asynchrone Serienverbindung vom Typ RS485, RS232 oder RS422 mit einer Überwachungsvorrichtung (10) gemäß einem Master/Slave-Protokoll zu kommunizieren, wobei das Verfahren umfasst:
- Speichern (510) einer dem Sensor (20) gewidmeten digitalen Signatur (216) und eines dem Sensor (20) gewidmeten Verschlüsselungsschlüssels (214) durch eine Verschlüsselungsschaltung (215);
- Empfangen (520) eines ersten Datenrahmens (310) gemäß dem Master/Slave-Protokoll über die asynchrone Serienverbindung von der Überwachungsvorrichtung (10), wobei der erste Datenrahmen (310) eine unverschlüsselte Adresse des ersten Sensors (20) und eine erste Nachricht umfasst, wobei die erste Nachricht eine von dem Sensor (20) zu verarbeitende Anfrage umfasst;
- Erzeugen (560) einer verschlüsselten Nachricht (332) durch die Verschlüsselungsschaltung (215) durch Verschlüsseln einer zweiten Nachricht (320A) mittels des dem Sensor (20) gewidmeten Verschlüsselungsschlüssels (214), wobei die zweite Nachricht (320A) eine Antwort (302) auf die Anfrage und die digitale Signatur (216) des Sensors (20) umfasst;
- Senden (570) eines zweiten Datenrahmens (330) gemäß dem Master/Slave-Protokoll über die asynchrone Serienverbindung an die Überwachungsvorrichtung (10), wobei der zweite Datenrahmen (330) eine unverschlüsselte Adresse (331) des Sensors und die verschlüsselte Nachricht (332) umfasst.

13. Verfahren nach Anspruch 12, wobei die erste Nachricht eine verschlüsselte Nachricht (312) ist, die aus einer Verschlüsselung einer ursprünglichen Nachricht resultiert, welche die von dem ersten Sensor (20) zu verarbeitende Anfrage (301) umfasst, wobei der erste Datenrahmen (310) einen Nachrichtenauthentifizierungscode (313) umfasst, wobei das Verfahren ferner umfasst:
- Entschlüsseln (530) der verschlüsselten Nachricht (312) durch eine Entschlüsselungsschaltung (215) des Sensors (20) derart, dass eine entschlüsselte Nachricht (300B) und eine Integritäts- und Authentifizierungsprüfung der entschlüsselten Nachricht (300B) durch die Entschlüsselungsschaltung (215) mittels des Nachrichtenauthentifizierungscodes (313) erzeugt werden.

## Claims

1. A supervisory device (10) configured to communicate with at least one sensor (20) via an asynchronous serial link of type RS485, RS232 or RS422 according to a master/slave protocol,
the supervisory device (10) comprising:
- a first communication interface (110A) configured to transmit to a first sensor (20), via the asynchronous serial link, a first data frame in accordance with the master/slave protocol, the first data frame (310) comprising an unencrypted address (311) of the first sensor (20) and a first message (312), the first message (300A) comprising a request (301) to be processed by the first sensor (20);
- the first communication interface (110A) being configured to receive, via the asynchronous serial link from the first sensor (20), a second data frame (330) in accordance with the master/slave protocol, the second data frame (330) comprising an unencrypted address (331) of the first sensor and an encrypted message (332), the encrypted message resulting from an encryption of a second message (320A), the second message (320A) comprising a digital signature (216) of the first sensor (20), specific to the first sensor (20), and a response (302) to the request;
- a decryption circuit (115A) configured to store a decryption key (114) specific to the first sensor (20); decrypt the encrypted message (332) using the decryption key (114) specific to the first sensor (20) to generate a decrypted message (320B); store a digital signature (116) of the first sensor (20) and authenticate the first sensor (20) on the basis of the decrypted message (320B) and the digital signature (116) stored in the decryption circuit (115A).

2. The supervisory device (10) according to claim 1, the second data frame (330) comprising a message authentication code (333), the decryption circuit (115A) being configured to perform an integrity and authentication check of the decrypted message (320B) using the message authentication code (333).

3. The supervisory device (10) according to claim 1 or 2, the first message being an encrypted message (312) resulting from an encryption of an initial message (300A) comprising the request (301) to be processed by the first sensor (20) and a digital signature (113) of the supervisory device (10), the first data frame (310) comprising a message authentication code (313), the supervisory device comprising
- an encryption circuit (115A) configured to store the digital signature (113) of the supervisory device (10) and an encryption key (114) specific to the first sensor (20) and to encrypt the initial message (300A) using the encryption key (114) so as to generate the first message (312) and generate the message authentication code (313).

4. The supervisory device (10) according to claim 3, the initial message comprising a new encryption key specific to the first sensor and the request being a request to replace a current encryption key (214) stored in an encryption circuit (215) of the sensor with the new encryption key.

5. The supervisory device (10) according to any one of claims 1 to 4, the first message being an encrypted message (312) resulting from an encryption of an initial message (300A) comprising the request (301) to be processed by the first sensor (20) and a digital signature (113) of the supervisory device (10), the supervisory device comprising
- a second communication interface (110B) linked to the first communication interface (110A) via a link (119) internal to the supervisory device (10) and connected to the other end of the asynchronous serial link (5) with respect to the first communication interface (110A), the second communication interface (110B) being configured to detect on the asynchronous serial link a return data frame resulting from the transmission via the asynchronous serial link of the first data frame (310);
the supervisory device (10) being configured to compare the first data frame (310) with the return data frame and to initiate an operation in the event of a difference between the first data frame (310) and the return data frame and/or in the event of an absence of a return data frame.

6. The supervisory device (10) according to claim 5, the supervisory device (10) being configured to detect a break in the asynchronous serial link at a break point located upstream of the first sensor (20) in the event of a lack of response from the first sensor (20) to the request,
the second communication interface (110B) being configured so as, in the event of detection of the rupture, to substitute itself for the first communication interface (110A) so as to transmit via the asynchronous serial link a third data frame in accordance with the master/slave protocol to the first sensor (20) located downstream of the rupture point, the third data frame (310) comprising an unencrypted address (311) of the first sensor (20) and a new request (301) to be processed by the first sensor (20).

7. A sensor (20) configured to communicate with a supervisory device (10) via an asynchronous serial link of type RS485, RS232 or RS422 according to a master/slave protocol,
the sensor (20) comprising:
- a communication interface (211) configured to receive via the asynchronous serial link from the supervisory device (10) a first data frame (310) in accordance with the master/slave protocol, the first data frame (310) comprising an unencrypted address of the first sensor (20) and a first message, the first message comprising a request to be processed by the sensor (20);
- an encryption circuit (215) configured to store an encryption key (214) specific to the sensor (20);
- the encryption circuit (215) being configured to store a digital signature (216) of the sensor, specific to the sensor (20), and to generate an encrypted message (332) by encrypting a second message (320A) by means of the encryption key (214) specific to the sensor (20), the second message comprising a response (302) to the request, and comprising the digital signature (216) of the sensor (20);
- the communication interface (211) being configured to transmit, via the asynchronous serial link to the supervisory device (10), a second data frame (330) in accordance with the master/slave protocol, the second data frame (330) comprising an unencrypted address (331) of the sensor and the encrypted message (332).

8. The sensor (20) according to claim 7, the first message being an encrypted message (312) resulting from an encryption of an initial message (300A) comprising the request (301) to be processed by the first sensor (20), the first data frame (310) comprising a message authentication code (313),
the sensor (20) comprising a decryption circuit (215) configured to decrypt the encrypted message (312) so as to generate a decrypted message and to perform an integrity and authentication check of the decrypted message (300B) using the message authentication code (313).

9. The sensor (20) according to claim 8, the initial message (300A) comprising a new encryption key specific to the first sensor and the request being a request to replace the current encryption key (214) stored in the encryption circuit (215) of the sensor with the new encryption key.

10. An intrusion detection system comprising a supervisory device according to any of claims 1 to 6 and at least one sensor according to any of claims 7 to 9, said at least one sensor being an intrusion detection sensor.

11. A communication method to be implemented by a supervisory device (10) configured to communicate with at least one sensor (20) via an asynchronous serial link of the RS485, RS232 or RS422 type according to a master/slave protocol, the communication method comprising:
- storing (410), by a decryption circuit (115A), a digital signature (116) of the first sensor (20) and a decryption key (114) specific to the first sensor (20);
- transmitting (440), via the asynchronous serial link of a first sensor (20), a first data frame in accordance with the master/slave protocol, the first data frame (310) comprising an unencrypted address (311) of the first sensor (20) and a first message (312), the first message (300A) comprising a request (301) to be processed by the first sensor (20);
- receiving (450), via the asynchronous serial link from the first sensor (20), a second data frame (330) in accordance with the master/slave protocol, the second data frame (330) comprising an unencrypted address (331) of the first sensor (10) and an encrypted message (332), the encrypted message resulting from an encryption of a second message (320A) comprising a digital signature (216) of the first sensor (20), specific to the first sensor (20), and a response (302) to the request;
- decrypting (460), by the decryption circuit, the encrypted message (332) by means of the decryption key (114) specific to the first sensor (20) to generate a decrypted message (320B);
- an authentication (470) of the first sensor (20) based on the decrypted message (320B) and on the digital signature (116) stored in the decryption circuit (115A).

12. A communication method to be implemented by a sensor (20) configured to communicate with at least one supervisory device (10) via an asynchronous serial link of the RS485, RS232 or RS422 type according to a master/slave protocol, the method comprising:
- storing (510), by an encryption circuit (215), a digital signature (216) of the sensor (20), specific to the sensor (20), and an encryption key (214) specific to the sensor (20);
- receiving (520), via the asynchronous serial link from the supervisory device (10), a first data frame (310) in accordance with the master/slave protocol, the first data frame (310) comprising an unencrypted address of the first sensor (20) and a first message, the first message comprising a request to be processed by the sensor (20);
- generating, (560) by the encryption circuit (215), an encrypted message (332) by encrypting a second message (320A) by means of the encryption key (214) specific to the sensor (20), the second message (320A) comprising a response (302) to the request and the digital signature (216) of the sensor (20);
- transmitting (570), via the asynchronous serial link to the supervisory device (10), a second data frame (330) in accordance with the master/slave protocol, the second data frame (330) comprising an unencrypted address (331) of the sensor and the encrypted message (332).

13. The method according to claim 12, the first message being an encrypted message (312) resulting from an encryption of an initial message comprising the request (301) to be processed by the first sensor (20), the first data frame (310) comprising a message authentication code (313), the method further comprising
- decrypting (530), by a decryption circuit (215) of the sensor (20), the encrypted message (312) so as to generate a decrypted message (300B), and checking the decrypted message (300B) for integrity and authentication, by the decryption circuit (215), using the message authentication code (313).
